# EUROPEAN PATENT SPECIFICATION

(11) **EP 1 170 526 B1**
(45) Date of publication and mention of the grant of the patent: **14.09.2005**
(21) Application number: 01116005.8
(22) Date of filing: 02.07.2001
(51) Int. Cl.: F16H 3/72

(54) **Stepless speed change gear**
Stufenloses Getriebe
Transmission à variation continue

(30) Priority: 07.07.2000 IT GE000092
(43) Date of publication of application: 09.01.2002
(73) Proprietor: Chigi, Matteo, Dr., 16155 Genova (IT)
(72) Inventor: Chigi, Matteo, Dr., 16155 Genova (IT)
(74) Representative: Sergio, Stefano

(56) References cited:
- DE-A- 4 014 635
- US-A- 3 645 152
- US-A- 6 056 662

## Description

This invention covers a stepless speed change gear or speed controller to be used on automotive or self-propelled vehicles or more generally, on any machine tool.

The speed change gear is a device mounted in the machine between the mechanical energy source and the user of this energy and this change gear permits the operator to change the speed or the required torque value or both at will. Speed change gears or speed controllers for automotive vehicles or operating machines are well known and these are normally mechanical velocity stage systems, for example by means of properly meshing gears, or stepless speed change, the speed being changed without disengaging the clutch along the power transmission line.

In this invention, special reference is made to these stepless speed change gears which may be mechanical, belt-driven, helical or epicycloidal gears.

This invention has the aim to improve the performance of a mechanical stepless speed change gear so that the speed may be varied continuously within a rather large range, with simple equipment, at low cost, low weight and with minimal space requirements.

The following Patents are already known regarding speed change gear and speed controller, i.e. US N. 6056662, US N.3645152 and DE 4014635.

US 6056662 discloses a high output transmission used for increasing speed and torque from an engine or motor. It includes a planetary drive for gradually increasing speed output, a speed reducer for increasing torque output, and a friction brake which gradually slows and stops a wheel member of the planetary drive. The planetary drive wheel member is gradually slowed and stopped so that the planetary drive input to output speed ratio is increased starting from a 1 to 1 speed ratio. As the braking force is gradually increased power output is transmitted starting with a slow speed with high torque to a fast speed with lower torque and when the braking force is decreased power output resumes to a slow speed with high torque while the engine or motor can run at a set or constant speed.

On the contrary US 3645152 discloses a controlled differential-gear system, which includes an input differential, an output differential, and an idler gear positioned between the two differentials to operate the output differential as a subtractive type when the input differential operates as an additive type. Brake means is arranged to brake one or the other side of the differentials to vary the output speed through an infinite range from maximum reverse, through zero, to maximum forward.

The third document DE 4014635 represents the closest prior-art in regard the present invention and it discloses a stepless speed change gear or speed controller which is made up of:
- a differential unit consisting of a differential carrier, two satellite wheels and two planet wheels, the latter being supported by their own integral shafts,
- a driving shaft rigidly connected to one of the satellite wheels of the differential,
- a driven shaft rigidly connected to the second satellite wheel of the differential,
- a gear wheel coaxial to the driving and driven shafts fastened around the differential carrier,
- a gear wheel supported by its shaft meshing with the gear wheel of the differential carrier,
- a speed governor regulating the number of revolutions of the shaft of the gear wheel meshing with the gear wheel of the differential carrier.

The speed change gear or speed controller subject matter of this invention, essentially consists of a differential carrier in which two satellite wheels and two planet wheels are acting, the two satellite wheels being respectively connected to the driving and to the driven shaft. The differential carrier features an external gear wheel coaxial to the satellite wheels, meshing with another gear wheel controlling the rotation of the differential carrier. The planet shafts protruding from the differential carrier are respectively featuring a speed selector connected, by means of a flow regulator, to the rotating part of the flow distributor which in turn is connected to the stationary part of the distributor fed by an oleo dynamic pump.

The fixed portion of the distributor supplies - by means of a suitable flow regulator- a speed selector mounted on the shaft of the gear wheel meshing with the gear wheel of the differential carrier..

Based upon the foregoing, operation will be as follows in the three limit cases: in the first case, when the gear wheel meshing with the gear wheel of the differential carrier is blocked by the oleo dynamic system and the regulating system completely releases rotation of the planet wheels, the differential carrier cannot rotate, so that the revolutions of the driving shaft are transmitted to the driven shaft by the planet and satellite wheels of the differential unit, at the same rotation speed but in opposite direction.

In this way it is possible to obtain gearing similar to "direct drive", since the driven shaft revolves at the same speed as the driving shaft, but in opposite direction.

In the second limit case, when the gear wheel meshing with the gear wheel mounted on the differential carrier can freely rotate, while the differential planet wheels are blocked by the oleo dynamic system, rotation of the driving shaft causes the whole differential unit and the driven shaft to rotate. Transmission in "direct drive" is thus achieved with the driven shaft rotating at the same number of revolutions as the driving shaft and in the same direction.

The third limit case is obtained when all wheels controlled by the oleo dynamic system can freely rotate. In this condition, the driving shaft drives the differential unit at half its speed, whereas the driven shaft which has a resisting action and is connected to the driving wheels or to the user, is stopped in neutral position.

Between the two above mentioned "direct drive" limit conditions, when the driven motor rotates in opposite or in the same direction as the driving shaft, and the intermediate "neutral" condition, it is possible to obtain a vast revolution range of the driven shaft rotating in either direction, while the number of revolutions and direction of rotation of the driving shaft remain unaltered so as to meet the required forward and reverse movements.

The invention in question is illustrated for exemplification purposes in the attached drawing, in which:

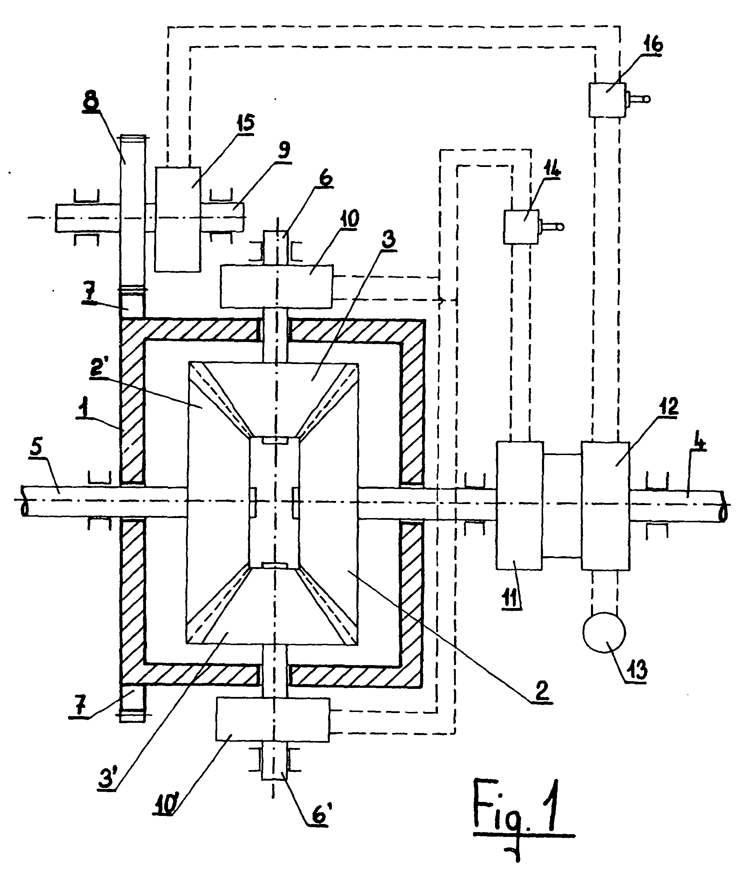

**Fig. 1** shows the configuration of the system.

With reference to this drawing, 1 refers to a differential carrier in which two satellite wheels 2, 2' meshing with two planet wheels 3,3' are housed, as commonly known.

The driving shaft 4 is rigidly connected to one satellite wheel 2 of the differential gear whereas the second satellite wheel 2' is rigidly connected to the driven shaft 5.

The planet wheels 3, 3' are supported by the shafts 6, 6'.

A gear wheel 7 is peripherally mounted on the differential carrier coaxially with the driving shaft 4 and driven shaft 5. This gear wheel 7 of the differential carrier 1 mechanically meshes with the other gear wheel 8 supported by its shaft 9.

The stepless speed change gear or speed controller subject matter of this invention is completed by a device regulating the speed of the gear wheels and this device is oleo dynamic type in this example.

In detail, this oleo dynamic device consists of two governors 10, 10' of the revolution speed of the shafts 6, 6' of the planet wheels 3, 3' and these governors are connected to a rotating distributor 11, which in turn is connected to a stationary distributor 12 fed by a hydraulic pump 13. A flow regulator 14 controls the flow in the governors 10, 10' regulating the revolutions of the shafts 6, 6' and their planet wheels 3, 3'.

Another speed governor 15 is mounted on the shaft 9 of the gear wheel 8 meshing with the gear wheel 7 of the differential carrier 1. This governor 15 controls the rotation speed of the wheel 8 by means of a flow regulator 16 connected to the stationary distributor 12.

These speed governors 10, 10' 15 may block the rotation of the shafts 6, 6', 9 of the corresponding gear wheels or may permit their free rotation.

The stepless speed change gear or speed controller is operating between two "direct drive" limit conditions and one "neutral" condition as explained as it follows:
**A - Operation in "direct drive" in which the driven shaft has the same number of revolutions as the driving shaft but in opposite direction -** If the gear wheel 8 connected to the gear wheel 7 of the differential unit 1 is blocked by the oleo dynamic system and rotation of the planet wheels is completely released, the differential unit cannot revolve so that the revolutions of the driving shaft 4 are transmitted by the satellite wheels 2, 2' and planet wheels 3,3 with the same number of revolutions, but in opposite direction to the driven shaft 5. The "direct drive" limit condition is thus achieved in which the driven shaft rotates in opposite direction at the same number of revolutions as the driving shaft.
**B - Operation in "direct drive" in which the driven shaft has the same number of revolutions as the driving shaft and is rotating in the same direction -** If the planet wheels 3, 3' are blocked by the oleo dynamic system and the gear wheel 8 meshing with the gear wheel 7 of the differential carrier is completely released, the driving shaft 4 will cause the whole differential carrier to rotate together with the driven shaft 5 at the same number of revolutions as the driving shaft and in the same direction.
**C - Operation in "neutral" position -** When completely releasing the rotation of the gear wheel 8 connected to the gear wheel 7 of the differential carrier 1 and also releasing the shaft 6, 6' and the planet wheels 3, 3' by means of the oleo dynamic control system, the driving shaft will cause the carrier 1 and the whole differential unit to rotate at half the number of revolutions of the driving shaft, so that the driven shaft 5, which has a resisting action on the driving wheels or user, will be stopped. Thus obtaining the "neutral" condition.
**D - Operation of the driven shaft at a variable number of revolutions with respect to the driving shaft rotating at a fixed number of revolutions -** By acting on the oleo dynamic speed governors 10, 10', 15 by means of the flow regulators 14, 16, various conditions of resisting action (ranging between blocking and complete release) on the shaft of the wheel 8 and of the planet wheels 3, 3', so that stepless speed change of the driven shaft may be obtained with respect to the number of revolutions of the driving shaft and may range from the two conditions of "direct drive" to "neutral" condition.

For example, if we consider case A in "direct drive" condition, where the driven shaft 5 has the same number of revolutions as the driving shaft but in opposite direction, the gear wheel 8 and the differential carrier 1 are blocked, whereas the satellite wheels 3, 3' are freely rotating to change the number of revolutions of the driven shaft 5 and, in our case, to reduce this number of revolutions with respect to the revolutions of the driving shaft, it is necessary to act on the flow regulator 16 which will progressively release rotation of this wheel 8 and of the differential unit 1, while the planet wheels 3, 3' will continue freely to rotate. When the wheel 8 is further progressively released, the number of revolutions of the driven shaft is further reduced until the wheel 8 is completely freed and the "neutral" condition is achieved.

When considering case B where operation is in "direct drive", the number of revolutions of the driven shaft 5 being the same and in the same direction as for the driving shaft 4, the planet gear wheels 3, 3' will be blocked whereas the gear wheel 8 and the differential unit 1 are freely rotating. To change the number of revolutions of the driven shaft 5 with respect to the driving shaft 4 operating at a constant number of revolutions, and, in our case, to reduce the number of revolutions of this driven shaft, it is necessary to act on the flow regulator 14 which will progressively release rotation of the planet wheels 3, 3', while the wheel 8 remains freely rotating. When progressively releasing the planet wheels 3.3', the number of revolutions of the driven shaft will decrease, though rotating in the same direction as the driving shaft which rotates at constant speed; the complete release of the planet wheels 3, 3' generates the "neutral" condition.

The two above mentioned "direct drive" conditions may be used for forward and reverse speed linked up to the intermediate "neutral" position.

Operation in forward and reverse gear are absolute alternatives and require alternating operation control of the flow regulators 14 and 16.

Whenever the driven shaft 5 is brought in rotation by forces not applied by the motor, (e.g. in the case of a self-propelled vehicle descending a slope), a suitable locking device should be mounted on the driving shaft 4 to prevent reversal of rotation of the driving shaft.

Obviously, the speed governors 10, 10', 15 are here indicated as hydraulic or oleo dynamic systems, but they can equally efficiently operate as mechanical, electric, electromechanical or other systems.

Therefore, the stepless speed change gear or speed controller subject matter of this invention is an extremely simple, functional, light weight mechanism with minimal space and maintenance requirements

## Claims

1. Stepless speed change gear or speed controller that is made up of:
- a differential unit consisting of a differential carrier (1), two satellite wheels (2, 2') and two planet wheels (3, 3'), the latter being supported by their own integral shafts (6, 6'),
- a driving shaft (4) rigidly connected to one of the satellite wheels (2) of the differential unit,
- a driven shaft (5) is rigidly connected to the second satellite wheel (2') of the differential unit,
- a gear wheel (7) coaxial to the driving and driven shafts (4, 5) fastened around the differential carrier (1),
- a gear wheel (8) supported by its shaft (9) meshing with the gear wheel (7) of the differential carrier (1),
- a speed governor (15) regulating the number of revolutions of the shafts (9) of the gear wheel (8) meshing with the gear wheel (7) of the differential carrier (1), **characterized in that** it is provided with:
- a speed governor (10, 10', 11, 12, 13, 14) regulates the number of revolutions of the shafts (6, 6') of the planet wheels (3, 3'),
so that, with the aid of the speed governor (10, 10', 15), the number of revolutions can be adjusted from zero to a maximum value respectively of the above shaft (9) and its gear wheel (8) meshing with the peripheral gear wheel (7) of the differential carrier (1) and of the shafts (6, 6') of the planet wheels (3, 3'), thus obtaining two direct drive limit conditions and one intermediate neutral limit condition, the first direct drive condition being achieved by blocking the wheel (8) and the differential carrier (1) and by completely release of the planet wheels (3, 3'), while the driven shaft (5) rotates at the same number of revolutions as the driving shaft (4) but in opposite direction, the second "direct drive" condition being achieved by blocking the planet wheels (3, 3') and by completely release of the gear wheel (8) meshing with the gear wheel (7) of the differential carrier (1) while the driven shaft (5) rotates at the same number of revolutions and in the same direction as the driving shaft (4), whereas the third neutral condition is achieved by completely release rotation of the gear wheel (8) of the differential unit and of the planet wheels (3, 3'), stepless variable control of the number of revolutions of the driven shaft (5) with respect to the driving shaft (4) between the direct drive limit conditions and the intermediate neutral condition being achieved by the speed governors (10, 10', 15) and the two operating conditions in which the driven shaft (5) rotates in the same or in the opposite direction of the driving shaft (4) will generate forward and reverse speed.

2. Stepless speed change gear as by claim 1 ***characterized* in that** the device regulating the number of revolutions of the shaft (9) and its gear wheel (8) meshing with the gear wheel (7) of the differential unit (1) consists of a speed governor (15) connected to a flow controller (16) which in turn is fed by a stationary distributor (12) connected to a hydraulic pump (13) so that the number of revolutions of the wheel (8) is selected by the flow controller (16).

3. Stepless speed change gear as by claim 1 ***characterized* in that** the device regulating the number of revolutions of the shafts (6.6') of the planet wheels (3,3') consists of speed governors (10, 10') connected to the flow controller (14) supplied by a rotating distributor (11) which in turn is connected to the stationary distributor (12) fed by an oleo dynamic pump (13), and the flow controller (14) selects the number of revolutions of planet wheels (3, 3').

4. Stepless speed change gear as by claim 1, ***characterized* in that** the speed governors (10, 10', 15) may operate not only in oleo dynamic mode, but also in mechanical, electromechanical or any other mode.

## Revendications

1. Dispositif pour le changement des vitesses ou régulateur de vitesse à variation continue se composant de:
- Un différentiel se composant d'un support (1) de différentiel deux roues satellites, (2,2') et deux roues planétaires (3, 3'), ces dernières étant supportées par leurs arbres solidaires (6,6').
- Un arbre moteur (4) connecté de manière rigide à une des roues satellites (2) du différentiel,
- Un arbre entraîné (5) étant rigidement connecté à la deuxième roue satellite (2') du différentiel
- Une roue dentée (7) coaxial aux arbres (moteur et entraîné) (4, 5) fixé autour du support (1) de différentiel,
- Une roue dentée (8) supporté par son arbre (9) s'embrayant avec la roue dentée (7) du support (1) de différentiel,
- Un régulateur de vitesse (15) réglant le nombre des tours des arbres (9) de la roue dentée (8) s'embrayant avec la roue dentée (7) du support (1) de différentiel, **caractérisé par le fait qu'**il a :
- Un régulateur de vitesse (10, 10', 11, 12, 13, 14) qui règle le nombre de tours des arbres (6, 6') des roues planétaires (3,3')
de manière à ce que, par le moyen du régulateur de vitesse (10, 10', 15) le nombre des tours peut être réglé à partir de zéro jusqu'à une valeur maximum respectivement sur l'arbre dont au-dessus (9) et sa roue dentée (8) s'embrayant sur la roue périphérique (7) du support (1) de différentiel et des arbres (6, 6') des roues planétaires (3, 3'), obtenant donc deux conditions limite de « prise directe » et une condition limite moyenne « neutre », où la première condition limite de « prise directe » est obtenue par le blocage de la roue (8) et du support (1) de différentiel et par le relâchement complet des roues planétaires (3, 3'), pendant que l'arbre entraîné (5) tourne au même nombre de tours que l'arbre moteur (4) mais en sens inverse, où la deuxième condition limite de « prise directe » est obtenue par le blocage des roues planétaires (3, 3') et par le relâchement complet de la roue dentée (8) s'embrayant avec la roue dentée (7) du support (1) de différentiel, pendant que l'arbre entraîné (5) tourne au même nombre de tours et dans le même sens par rapport à l'arbre moteur (4), tandis que la troisième condition, « neutre », est obtenue,par le relâchement complet de la rotation de la roue dentée (8) du différentiel et des roues planétaires (3, 3'), où la variation continue de la vitesse du nombre des tours de l'arbre entraîné (5) par rapport à l'arbre moteur (4), étant la condition à moitié entre les deux conditions limite de « prise directe » et la condition moyenne « neutre » est obtenue par les régulateurs de vitesse (10, 10', 15) et où les deux conditions de fonctionnement dans lesquelles l'arbre entraîné (5) tourne dans le même sens ou en sens inverse par rapport à l'arbre moteur (4) produiront la marche en avant ou en arrière.

2. Dispositif pour le changement des vitesses à variation continue selon la revendication 1 **caractérisé par le fait que** le dispositif réglant le nombre des tours de l'arbre (9) et de sa roue dentée (8) qui s'embraye avec la roue dentée (7) du différentiel (1) se compose d'un régulateur de vitesse (15) connecté à un régulateur de débit (16) qui, à son tour, est alimenté par un distributeur stationnaire (12) connecté à une pompe hydraulique (13) de manière à ce que le nombre des tours de la roue (8) soit sélectionné par le régulateur du débit (16).

3. Dispositif pour le changement des vitesses à variation continue selon la revendication 1 **caractérisé par le fait que** le dispositif qui règle le nombre des tours des arbres (6, 6') des roues planétaires (3,3') se compose de régulateurs de vitesse (10, 10') connectés au limiteur de débit (14) alimenté par un distributeur tournant (11) qui, à son tour, est connecté au distributeur stationnaire (12) alimenté par une pompe oléodynamique (13), où le dit régulateur de débit (14) sélectionne le nombre de tours des planétaires (3, 3').

4. Dispositif pour le changement des vitesses à variation continue selon la revendication 1 **caractérisé par le fait que** les régulateurs de vitesse (10, 10') peuvent fonctionner non seulement de manière oléodynamique, mais aussi de manière mécanique, électro- mécanique ou de toute autre manière.

## Patentansprüche

1. Stufenlose Geschwindigkeitswechselgetriebe oder Geschwindigkeitsregler, der vorsieht:
- eine Differentialeinheit, die aus einem Differentialkasten (1), zwei Satellitenrädern (2, 2') und zwei Umlaufrädern (3, 3') besteht, letztere werden durch ihre eigenen eingebauten Wellen (6, 6') unterstützt,
- eine Antriebswelle (4), die fest mit einem der Satellitenräder (2') der Differentialeinheit verbunden ist,
- ein Zahnrad (7), koaxial zur Antriebswelle und zur getriebenen Welle (4, 5) und um den Differentialkasten (1) befestigt,
- ein Zahnrad (8), das durch seine eigene Welle (9), die mit dem Zahnrad (7) des Differentialkastens (1) ineinander greift, unterstützt wird,
- einen Geschwindigkeitsregler (15), der die Drehzahl der Wellen (9) des Zahnrads (8) reguliert, das mit dem Zahnrad (7) des Differentialkastens (1) ineinander greift, **gekennzeichnet dadurch, dass** er versehen ist mit:
- einer Reglervorrichtung (10, 10', 11, 12, 13, 14), die die Drehzahl der Wellen (6, 6') der Umlaufräder (3, 3') reguliert,
so dass mit Hilfe des Geschwindigkeitsreglers (10, 10', 15) die Drehzahl von Null bis zum Maximalwert reguliert werden kann hinsichtlich der genannten Welle (9) und ihres Zahnrads (8), das mit dem äußeren Zahnrad (7) des Differentialkastens (1) und der Wellen (6, 6') der Umlaufräder (3, 3') ineinander greift, und so zwei "Direktkupplungss"-Grenzbedingungen und eine dazwischenliegende "neutrale" Grenzbedingung erreicht werden können, die erste "Direktkupplungs"-Bedingung wird durch Sperren des Zahnrads (8) und des Differentialkastens (1) und durch völliges Freilassen der Umlaufräder (3, 3'), erreicht, während bei Drehen der getriebenen Welle (5) mit gleicher Drehzahl wie die Antriebswelle (4), aber in entgegengesetzter Richtung, die zweite "Direktkupplungs"-Bedingung erreicht wird durch Sperren der Umlaufräder (3, 3') und durch völliges Freilassen des Zahnrads (8), das mit dem Zahnrad (7) des Differentialkastens (1) ineinander greift, und sich die getriebene Welle (5) bei derselben Drehzahl und in derselben Richtung wie die Antriebswelle (4) dreht, während die dritte "neutrale" Bedingung erzielt wird durch völliges Freilassen der Drehung des Zahnrads (8) der Differentialeinheit (1) und der Umlaufräder (3, 3'), wo die stufenlose veränderliche Drehzahlregulierung der getriebenen Welle (5) hinsichtlich der Antriebswelle (4) zwischen den genannten "Direktkupplungs"-Grenzbedingungen und der dazwischenliegenden "neutralen" Bedingung durch die genannten Geschwindigkeitsregler (10, 10', 15) erreicht wird und wo die beiden Betriebsbedingungen, bei denen sich die getriebene Welle (5) in derselben oder entgegengesetzten Richtung von der Antriebswelle (4) dreht, die Voraussetzung für den Vorwärts- und Rückwärtsgang schafft.

2. Stufenloses Geschwindigkeitswechselgetriebe wie in Anspruch 1, **gekennzeichnet dadurch, dass** die Vorrichtung der Drehzahlregulierung der Welle (9) und des dazugehörigen Zahnrads (8), das mit dem Zahnrad (7) der Differentialeinheit (1) ineinander greift, aus einem Geschwindigkeitsregler (15) besteht, der mit einem Flussregler (16) verbunden ist, der seinerseits durch den festen Verteiler (12) gespeist wird, dieser ist mit einer hydraulischen Pumpe (13)verbunden, so dass die Drehzahl des Zahnrads (8) durch den Flussregler (16) gewählt wird.

3. Stufenloses Geschwindigkeitsgetriebe wie in Anspruch 1, **gekennzeichnet dadurch, dass** die Vorrichtung der Drehzahlregulierung der Wellen (6, 6') der Umlaufräder (3, 3') aus Geschwindigkeitsreglern (10, 10') besteht, die mit dem Flussregler (14) verbunden sind und durch einen sich drehenden Verteiler (11) gespeist werden, der seinerseits mit dem festen Verteiler (12) durch eine öldynamische Pumpe (13) gespeist, verbunden ist, und der Flussregler (14) wählt die Drehzahl der Umlaufräder (3, 3').

4. Stufenloses Geschwindigkeitswechselgetriebe wie in Anspruch 1, **gekennzeichnet dadurch, dass** die Geschwindigkeitsregler (10, 10', 15) nicht nur auf öldynamische, sondern auch auf mechanische, elektromechanische oder eine beliebig andere Weise arbeiten können.
